# EUROPEAN PATENT SPECIFICATION

(11) **EP 3 339 364 B1**
(45) Date of publication and mention of the grant of the patent: **29.01.2020**
(21) Application number: 17207213.4
(22) Date of filing: 14.12.2017
(51) Int. Cl.: C08L 7/00, C08L 79/02, C08K 3/04, C09C 1/56, C08K 5/09, B60C 1/00

(54) **RUBBER COMPOSITION AND PNEUMATIC TIRE**
KAUTSCHUKZUSAMMENSETZUNG UND LUFTREIFEN
COMPOSITION DE CAOUTCHOUC ET PNEUMATIQUE

(30) Priority: 21.12.2016 US 201615386003
(43) Date of publication of application: 27.06.2018
(73) Proprietor: The Goodyear Tire & Rubber Company, Akron, OH 44316 (US)
(72) Inventor: JIANG, Yingying, Tung Chung Lantau New Territories Hong Kong (CN); KLINKENBERG, Maurice Peter Catharina Jozef, 9188 Vichten (LU); FORCINITI, Leandro, Copley, OH 44321-2190 (US); BUSCH, Warren James, North Canton, OH Ohio 44720 (US); SANDSTROM, Paul Harry, Cuyahoga Falls, OH Ohio 44223 (US); MARTTER, Teresa Diane, Akron, OH Ohio 44320 (US)
(74) Representative: Kutsch, Bernd

(56) References cited:
- EP-A1- 1 484 362
- US-A- 5 723 531
- US-A1- 2003 092 801

## Description

### Background of the Invention

It is highly desirable for tires to have good wet skid resistance, low rolling resistance, and good wear characteristics. It has traditionally been very difficult to improve a tire's wear characteristics without sacrificing its wet skid resistance and traction characteristics. These properties depend, to a great extent, on the dynamic viscoelastic properties of the rubbers utilized in making the tire.

In order to reduce the rolling resistance and to improve the tread wear characteristics of tires, rubbers having a high rebound have traditionally been utilized in making tire tread rubber compounds. On the other hand, in order to increase the wet skid resistance of a tire, rubbers which undergo a large energy loss have generally been utilized in the tire's tread. In order to balance these two viscoelastically inconsistent properties, mixtures of various types of synthetic and natural rubber are normally utilized in tire treads. For instance, various mixtures of styrene-butadiene rubber and polybutadiene rubber are commonly used as a rubbery material for automobile tire treads.

The glass transition temperature Tg of a rubber or elastomer is determined as a peak midpoint by a differential scanning calorimeter (DSC) at a temperature rate of increase of 10ºC per minute, according to ASTM D7426-08 (2013). The measurement of Tg for resins is done by DSC according to ASTM D6604. The number average molecular weight is measured with gel permeation chromatography (GPC) using polystyrene calibration standards, according to ASTM 3536. The softening point of a resin is determined by ASTM E28-14 which may sometimes be referred to as a ring and ball softening point. A reference to a cis-1,4-polybutadiene is a 1,4-polybutadiene having at least 90 percent cis-content. A reference to a cis-1,4-polyisoprene is a 1,4-polyisoprene having at least 90 percent cis-content.

### Summary of the Invention

The invention relates to a rubber composition in accordance with claim 1 and to a tire in accordance with claim 11.

Dependent claims refer to preferred embodiments of the invention.

### Detailed Description of the Example Embodiments of the Invention

There is disclosed a vulcanizable rubber composition comprising:
(A) a diene based elastomer,
(B) from 10 to 60 parts by weight, per 100 parts by weight of elastomer (phr), of an oxidized carbon black; and
(C) from 0.1 to 0.5 phr of a polymeric amine comprising a primary amine functionality.

There is further disclosed a pneumatic tire comprising the rubber composition.

The rubber composition may include one or more rubbers or elastomers containing olefinic unsaturation. The phrases "rubber or elastomer containing olefinic unsaturation" or "diene based elastomer" are intended to include both natural rubber and its various raw and reclaim forms as well as various synthetic rubbers. In the description of this invention, the terms "rubber" and "elastomer" may be used interchangeably, unless otherwise prescribed. The terms "rubber composition," "compounded rubber" and "rubber compound" are used interchangeably to refer to rubber which has been blended or mixed with various ingredients and materials and such terms are well known to those having skill in the rubber mixing or rubber compounding art. Representative synthetic polymers are the homopolymerization products of butadiene and its homologues and derivatives, for example, methylbutadiene, dimethylbutadiene and pentadiene as well as copolymers such as those formed from butadiene or its homologues or derivatives with other unsaturated monomers. Among the latter are acetylenes, for example, vinyl acetylene; olefins, for example, isobutylene, which copolymerizes with isoprene to form butyl rubber; vinyl compounds, for example, acrylic acid, acrylonitrile (which polymerize with butadiene to form NBR), methacrylic acid and styrene, the latter compound polymerizing with butadiene to form SBR, as well as vinyl esters and various unsaturated aldehydes, ketones and ethers, e.g., acrolein, methyl isopropenyl ketone and vinylethyl ether. Specific examples of synthetic rubbers include neoprene (polychloroprene), polybutadiene (including cis-1,4-polybutadiene), polyisoprene (including cis-1,4-polyisoprene), butyl rubber, halobutyl rubber such as chlorobutyl rubber or bromobutyl rubber, styrene/isoprene/butadiene rubber, copolymers of 1,3-butadiene or isoprene with monomers such as styrene, acrylonitrile and methyl methacrylate, as well as ethylene/propylene terpolymers, also known as ethylene/propylene/diene monomer (EPDM), and in particular, ethylene/propylene/ dicyclopentadiene terpolymers. Additional examples of rubbers which may be used include solution polymerized polymers (SBR, BR, IR, IBR and SIBR) functionalized with groups such as amine including primary, secondary and tertiary amines, alkoxy including monoalkoxy, dialkoxy, and trialkoxy, silyl, thiols, thioester, thioether, sulfanyl, mercapto, sulfide, and combinations thereof. Such functionalized solution polymerized polymers may be functionalized at the polymer chain ends for example via functional initiators or terminators, or within the polymer chains for example via functional monomers, or a combination of in-chain and end-of-chain functionalization. Specific examples of suitable functional solution polymerized polymers include those described in US-B-7,342,070 having amine and alkoxysilyl functionality, and those described in US-B-8,217,103 and US-B-8,569,409 having alkoxysilyl and sulfide (i.e. thioether) functionality. Such thiol functionality includes thiol or sulfanyl functionality arising from cleavage of sulfur containing groups during compound processing, such as for example from thioesters and thioethers. The preferred rubber or elastomers are polyisoprene (natural or synthetic), polybutadiene and SBR and their functionalized versions.

Also included are silicon-coupled and tin-coupled star-branched polymers.

In one aspect, the rubber is preferably of at least two of diene based rubbers. For example, a combination of two or more rubbers is preferred such as cis 1,4-polyisoprene rubber (natural or synthetic, although natural is preferred), 3,4-polyisoprene rubber, styrene/isoprene/butadiene rubber, emulsion and solution polymerization derived styrene/butadiene rubbers, cis 1,4-polybutadiene rubbers and emulsion polymerization prepared butadiene/acrylonitrile copolymers.

In one aspect of this invention, an emulsion polymerization derived styrene/butadiene (E-SBR) might be used having a relatively conventional styrene content of 20 to 28 percent bound styrene or, for some applications, an E-SBR having a medium to relatively high bound styrene content, namely, a bound styrene content of 30 to 45 percent.

By emulsion polymerization prepared E-SBR, it is meant that styrene and 1,3-butadiene are copolymerized as an aqueous emulsion. Such are well known to those skilled in such art. The bound styrene content can vary, for example, from 5 to 50 percent. In one aspect, the E-SBR may also contain acrylonitrile to form a terpolymer rubber, as E-SBAR, in amounts, for example, of 2 to 30 weight percent bound acrylonitrile in the terpolymer.

Emulsion polymerization prepared styrene/butadiene/acrylonitrile copolymer rubbers containing 2 to 40 weight percent bound acrylonitrile in the copolymer are also contemplated as diene based rubbers for use in this invention.

The solution polymerization prepared SBR (S-SBR) typically has a bound styrene content in a range of 5 to 50, preferably 9 to 36, percent. The S-SBR can be conveniently prepared, for example, by organo lithium catalyzation in the presence of an organic hydrocarbon solvent.

In one embodiment, cis 1,4-polybutadiene rubber (BR) may be used. Such BR can be prepared, for example, by organic solution polymerization of 1,3-butadiene. The BR may be conveniently characterized, for example, by having at least a 90 percent cis 1,4-content.

The cis 1,4-polyisoprene and cis 1,4-polyisoprene natural rubber are well known to those having skill in the rubber art.

The term "phr" as used herein, and according to conventional practice, refers to "parts by weight of a respective material per 100 parts by weight of rubber, or elastomer."

The rubber composition further includes an oxidized carbon black. Suitable oxidized carbon black includes a surface-treated carbon black, treated via oxidation, oxidation followed by treatment with a base, or chlorination followed by treatment with a base, which provides a carbon black with surface functional groups composed of oxygen, basic or a combination of oxygen and basic functional groups, the functionalization representing a carboxylic acid (-COOH) or hydroxide (-OH) functionality. Suitable oxidized carbon blacks may be produced following the teachings of US-B-6,120,594, US-B-6,471,933 or US-A-2013/0046064.

In one embodiment, the oxidized carbon black is an N234 carbon black oxidized as described above.

In one embodiment, the rubber composition includes from 10 to 60 phr of oxidized carbon black.
The rubber composition further includes a polymeric amine, where the polymeric amine has a primary amine functionality. Suitable polymeric amines include but are not limited to polyethyleneimine, polypropyleneimine, and polyoxyalkylene amines. In one embodiment, the polymeric amine is a polyethyleneimine. In one embodiment, the polyethyleneimine has an average molecular weight of 800 to 2000000, preferably 1000 to 20000, more preferably 2000 to 4000. Suitable polyethyleneimine is available commercially as Lupasol® from BASF.

In one embodiment, the polymeric amine is a polyoxyalkylene amine. The polyoxyalkylene amine can include a polyoxyalkylene monoamine, diamine, triamine, or combinations thereof. These compounds are defined by an amino group attached to a terminus of a polyether backbone and, thus, are considered polyether amines. The amino group is a primary amino group. Depending upon whether the polyoxyalkylene amine is a mono-, di-, or triamine, each compound can contain, respectively, one, two, or three amino groups, e.g. primary amino groups, with each group being attached to the terminus of a polyether backbone. Accordingly, one or more polyether backbones may be necessary to accommodate the number of terminal amino groups. Further description of polyoxyalkylene amines and their use is as disclosed in US-A-7,714,051. Suitable polyoxyalkylene amines include polyoxyalkylene mono-, di-, and triamines commercially available from Huntsman Chemical of The Woodlands, Tex. and sold under the tradename JEFFAMINE®.

Polymeric amine may be used in an amount ranging from 0.1 to 0.5 phr. In one embodiment, the polymeric amine is used in an amount ranging from 0.2 to 0.4 phr. In one embodiment, the polymeric amine is used in an amount ranging from 0.3 to 0.4 phr.

The rubber composition may include an aromatic carboxylic acid or aromatic acid anhydride. Suitable aromatic carboxylic acids include but are not limited to benzoic acid and hydroxybenzoic acids, such as 2-hydroxybenzoic acid (salicylic acid), 3-hydroxybenzoic acid, and 4-hydroxybenzoic acid, substituted versions thereof, and the like. Suitable aromatic acid anhydrides include phthalic anhydride, benzoic anhydride, substituted versions thereof, and the like.

In one embodiment, the aromatic carboxylic acid or aromatic acid anhydride may be used in an amount greater than, or in excess of, that used for the polymeric amine. In one embodiment, the weight ratio aromatic carboxylic acid or aromatic acid anhydride to polymeric amine is in a range of 1:2 to 2:1, i.e. 0.5 to 2 parts by weight per 1 part by weight of the polymeric amine.

The rubber composition may also include up to 70 phr of processing oil. Processing oil may be included in the rubber composition as extending oil typically used to extend elastomers. Processing oil may also be included in the rubber composition by addition of the oil directly during rubber compounding. The processing oil used may include both extending oil present in the elastomers, and process oil added during compounding. Suitable process oils include various oils as are known in the art, including aromatic, paraffinic, naphthenic, vegetable oils, and low PCA oils, such as MES, TDAE, SRAE and heavy naphthenic oils. Suitable low PCA oils include those having a polycyclic aromatic content of less than 3 percent by weight as determined by the IP346 method. Procedures for the IP346 method may be found in Standard Methods for Analysis & Testing of Petroleum and Related Products and British Standard 2000 Parts, 2003, 62nd edition, published by the Institute of Petroleum, United Kingdom.

The rubber composition may include silica. Prefereably, it includes from 0 or 5 phr up to 30 phr of silica, or from 10 phr to 70 phr of silica.

The commonly employed siliceous pigments which may be used in the rubber compound include conventional pyrogenic and precipitated siliceous pigments (silica). In one embodiment, precipitated silica is used. The conventional siliceous pigments employed in this invention are precipitated silicas such as, for example, those obtained by the acidification of a soluble silicate, e.g., sodium silicate.

Such conventional silicas might be characterized, for example, by having a BET surface area, as measured using nitrogen gas. In one embodiment, the BET surface area may be in the range of 40 to 600 square meters per gram. In another embodiment, the BET surface area may be in a range of 80 to 300 square meters per gram. The BET method of measuring surface area is described in the Journal of the American Chemical Society, Volume 60, Page 304 (1930).

The conventional silica may also be characterized by having a dibutylphthalate (DBP) absorption value in a range of 100 to 400, alternatively 150 to 300.

Various commercially available silicas may be used, such as, only for example herein, and without limitation, silicas commercially available from PPG Industries under the Hi-Sil trademark with designations 210 and 243; silicas available from Rhodia, with, for example, designations of Z1165MP and Z165GR; and silicas available from Degussa AG with, for example, designations VN2 and VN3. Silica pretreated or prereacted with organosilanes may also be used, such as Agilon® 400 and the like from PPG.

Commonly employed (i.e., non-oxidized) carbon blacks can be used as a conventional filler in an amount up to 30 phr. Representative examples of such carbon blacks include N110, N120, N121, N134, N220, N231, N234, N242, N293, N299, N315, N326, N330, N332, N339, N343, N347, N351, N358, N375, N539, N550, N582, N630, N642, N650, N683, N754, N762, N765, N774, N787, N907, N908, N990 and N991. These carbon blacks have iodine absorptions ranging from 9 to 145 g/kg and DBP number ranging from 34 to 150 cm³/100 g.

In one embodiment the rubber composition may contain a conventional sulfur containing organosilicon compound. In one embodiment, the sulfur containing organosilicon compounds are the bis(trialkloxysilylalkyl) polysulfides, including 3,3'-bis(trimethoxy or triethoxy silylpropyl) polysulfides. In one embodiment, the sulfur containing organosilicon compounds are 3,3'-bis(triethoxysilylpropyl) disulfide and/or 3,3'-bis(triethoxysilylpropyl) tetrasulfide.

In another embodiment, suitable sulfur containing organosilicon compounds include compounds disclosed in US-B-6,608,125. In one embodiment, the sulfur containing organosilicon compounds includes 3-(octanoylthio)-1-propyltriethoxysilane, CH₃(CH₂)₆C(=O)-S-CH₂CH₂CH₂Si(OCH₂CH₃)₃, which is available commercially as NXT™ from Momentive Performance Materials.

In another embodiment, suitable sulfur containing organosilicon compounds include those disclosed in US-A-2003/0130535. In one embodiment, the sulfur containing organosilicon compound is Si-363 from Degussa.

The amount of the sulfur containing organosilicon compound in a rubber composition will vary depending on the level of other additives that are used. Generally speaking, the amount of the compound will range from 0.5 to 20 phr. In one embodiment, the amount will range from 1 to 10 phr.

It is readily understood by those having skill in the art that the rubber composition would be compounded by methods generally known in the rubber compounding art, such as mixing the various sulfur-vulcanizable constituent rubbers with various commonly used additive materials such as, for example, sulfur donors, curing aids, such as activators and retarders and processing additives, such as oils, resins including tackifying resins and plasticizers, fillers, pigments, fatty acid, zinc oxide, waxes, antioxidants and antiozonants and peptizing agents. As known to those skilled in the art, depending on the intended use of the sulfur vulcanizable and sulfur-vulcanized material (rubbers), the additives mentioned above are selected and commonly used in conventional amounts. Representative examples of sulfur donors include elemental sulfur (free sulfur), an amine disulfide, polymeric polysulfide and sulfur olefin adducts. In one embodiment, the sulfur-vulcanizing agent is elemental sulfur. The sulfur-vulcanizing agent may be used in an amount ranging from 0.5 to 8 phr, alternatively with a range of from 1.5 to 6 phr. Typical amounts of tackifier resins, if used, comprise 0.5 to 10 phr, usually 1 to 5 phr. Typical amounts of processing aids comprise 1 to 50 phr. Typical amounts of antioxidants comprise 1 to 5 phr. Representative antioxidants may be, for example, diphenyl-p-phenylenediamine and others, such as, for example, those disclosed in The Vanderbilt Rubber Handbook (1978), Pages 344 through 346. Typical amounts of antiozonants comprise 1 to 5 phr. Typical amounts of fatty acids, if used, which can include stearic acid comprise 0.5 to 3 phr. Typical amounts of zinc oxide comprise 2 to 5 phr. Typical amounts of waxes comprise 1 to 5 phr. Often microcrystalline waxes are used. Typical amounts of peptizers comprise 0.1 to 1 phr. Typical peptizers may be, for example, pentachlorothiophenol and dibenzamidodiphenyl disulfide.

Accelerators are used to control the time and/or temperature required for vulcanization and to improve the properties of the vulcanizate. In one embodiment, a single accelerator system may be used, i.e., primary accelerator. The primary accelerator(s) may be used in total amounts ranging from 0.5 to 4, alternatively 0.8 to 1.5, phr. In another embodiment, combinations of a primary and a secondary accelerator might be used with the secondary accelerator being used in smaller amounts, such as from 0.05 to 3 phr, in order to activate and to improve the properties of the vulcanizate. Combinations of these accelerators might be expected to produce a synergistic effect on the final properties and are somewhat better than those produced by use of either accelerator alone. In addition, delayed action accelerators may be used which are not affected by normal processing temperatures but produce a satisfactory cure at ordinary vulcanization temperatures. Vulcanization retarders might also be used. Suitable types of accelerators that may be used in the present invention are amines, disulfides, guanidines, thioureas, thiazoles, thiurams, sulfenamides, dithiocarbamates and xanthates. In one embodiment, the primary accelerator is a sulfenamide. If a second accelerator is used, the secondary accelerator may be a guanidine, dithiocarbamate or thiuram compound.

The mixing of the rubber composition can be accomplished by methods known to those having skill in the rubber mixing art. For example, the ingredients are typically mixed in at least two stages, namely, at least one non-productive stage followed by a productive mix stage. The final curatives including sulfur-vulcanizing agents are typically mixed in the final stage which is conventionally called the "productive" mix stage in which the mixing typically occurs at a temperature, or ultimate temperature, lower than the mix temperature(s) than the preceding non-productive mix stage(s). The rubber composition may be subjected to a thermomechanical mixing step. The thermomechanical mixing step generally comprises a mechanical working in a mixer or extruder for a period of time suitable in order to produce a rubber temperature between 140°C and 190°C. The appropriate duration of the thermomechanical working varies as a function of the operating conditions, and the volume and nature of the components. For example, the thermomechanical working may be from 1 to 20 minutes.

The rubber composition may be incorporated in a variety of rubber components of the tire. For example, the rubber component may be a tread (including tread cap and tread base), sidewall, apex, chafer, sidewall insert, wirecoat or innerliner. In one embodiment, the component is a tread.

The pneumatic tire of the present invention may be a race tire, passenger tire, aircraft tire, agricultural, earthmover, off-the-road or truck tire. In one embodiment, the tire is a passenger or truck tire. The tire may also be a radial or bias.

Vulcanization of the pneumatic tire of the present invention is generally carried out at conventional temperatures ranging from 100°C to 200°C. In one embodiment, the vulcanization is conducted at temperatures ranging from 110°C to 180°C. Any of the usual vulcanization processes may be used such as heating in a press or mold, heating with superheated steam or hot air. Such tires can be built, shaped, molded and cured by various methods which are known and will be readily apparent to those having skill in such art.

This invention is illustrated by the following examples. Unless specifically indicated otherwise, parts and percentages are given by weight.

### Example 1

In this example, the effect of compounding a polymeric amine and an oxidized carbon black with a diene rubber is illustrated.

Rubber compounds were mixed in a laboratory mixer in a multi-step mixing process following the recipe given in Tables 1 and 2 (all amounts in phr). Polyethyleneimine (PEI) was added in a first non-productive mix step. An equal amount by weight of salicylic acid (i.e. salicylic acid/polyethyleneimine = 1) was added to all compounds during a second non-productive mix step.

The mixed compounds were tested for viscoelastic, rolling resistance and wear properties with results given in Table 3.

Viscoelastic properties were determined using a Flexsys Rubber Process Analyzer (RPA) 2000. A description of the RPA 2000, its capability, sample preparation, tests and subtests can be found in these references. H. A. Pawlowski and J. S. Dick, Rubber World, June 1992; J. S. Dick and H. A. Pawlowski, Rubber World, January 1997; and J. S. Dick and J. A. Pawlowski, Rubber & Plastics News, Apr. 26 and May 10, 1993.

Rebound at 100 °C was used as an indicator of rolling resistance. Rebound was measured using a Zwick rebound tester according to ASTM D1054. DIN abrasion was used as an indicator of wear resistance. Wear data were measured according to DIN 53516 or ASTM D5963 abrasion resistance test procedure using a Zwick drum abrasion unit, model 6102 with 2.5 Newtons force. DIN standards are German test standards.

**Table 1**

| | |
|---|---|
| Natural Rubber | 100 |
| Carbon Black | variable as per Table 2 |
| Polyethyleneimine | variable as per Table 2 |
| Silica | 9 |
| Zinc oxide | 3 |
| Fatty acids | 3 |
| Silane¹ | 2 |
| Antidegradant | 1 |
| Sulfur | 0.9 |
| Sulfenamide | 1.15 |

| | |
|---|---|
| ¹ 50% by weight silane polysulfide on carbon black | |

**Table 2**

| Sample No. | 1 | 2 | 3 | 4 | 5 | 6 | 7 | 8 | 9 |
|---|---|---|---|---|---|---|---|---|---|
| Type | Comp | Comp | Cont | Cont | Cont | Cont | Inv | Inv | Inv |
| Carbon Black¹ | 0 | 0 | 43 | 0 | 0 | 0 | 0 | 0 | 0 |
| Carbon Black² | 43 | 0 | 0 | 29 | 15 | 0 | 0 | 0 | 0 |
| Carbon Black³ | 0 | 43 | 0 | 0 | 0 | 0 | 0 | 0 | 0 |
| Oxidized Carbon Black⁴ | 0 | 0 | 0 | 14 | 28 | 43 | 43 | 43 | 43 |
| Polyethyleneimine⁵ | 0 | 0 | 0 | 0 | 0 | 0 | 0.1 | 0.3 | 0.4 |
| Salicylic Acid | 0 | 0 | 0 | 0 | 0 | 0 | 0.1 | 0.3 | 0.4 |

| | | | | | | | | | |
|---|---|---|---|---|---|---|---|---|---|
| ¹ N121 type ² N120 type ³ N234 type ⁴ N234 type, oxidized as CD2125XZ from Aditya Birla ⁵ Lupasol from BASF | | | | | | | | | |

**Table 3**

| Sample No. | 1 | 2 | 3 | 4 | 5 | 6 | 7 | 8 | 9 |
|---|---|---|---|---|---|---|---|---|---|
| | | | | | | | | | |

| RPA at 100 °C | | | | | | | | | |
|---|---|---|---|---|---|---|---|---|---|
| G'(0.83Hz @ 15%) | 0.134 | 0.158 | 0.162 | 0.156 | 0.175 | 0.168 | 0.255 | 0.269 | 0.245 |
| G'(1 Hz @ 1%) | 1.96 | 2.1 | 2.13 | 1.65 | 1.44 | 1.15 | 1.265 | 1.387 | 1.228 |
| G'(1 Hz @ 50%) | 0.81 | 0.82 | 0.85 | 0.78 | 0.75 | 0.68 | 0.784 | 0.84 | 0.787 |
| TanD (1 Hz @10%) | 0.135 | 0.143 | 0.139 | 0.117 | 0.105 | 0.093 | 0.086 | 0.084 | 0.077 |
| | | | | | | | | | |

| Instron Tear¹ | | | | | | | | | |
|---|---|---|---|---|---|---|---|---|---|
| Original | | | | | | | | | |
| Average Force, N | 334 | 328 | 309 | 355 | 412 | 474 | 339 | 307 | 347 |

| Aged² | | | | | | | | | |
|---|---|---|---|---|---|---|---|---|---|
| Average Force, N | 329 | 337 | 314 | 365 | 437 | 511 | 358 | 371 | 368 |
| | | | | | | | | | |

| DIN Abrasion | | | | | | | | | |
|---|---|---|---|---|---|---|---|---|---|
| Relative loss, mm3 | 133 | 129 | 128 | 138 | 149 | 173 | 142 | 135 | 131 |

| Zwick Rebound | | | | | | | | | |
|---|---|---|---|---|---|---|---|---|---|
| Rebound 100 °C | 59 | 58 | 58 | 63 | 63 | 65 | 67 | 67 | 69 |

| | | | | | | | | | |
|---|---|---|---|---|---|---|---|---|---|
| ¹ Cured 32 min at 150 °C ² 7 days at 70 °C in Air | | | | | | | | | |

As seen in Table 3, the oxidized carbon black combined with polyethyleneimine showed improved hysteresis reflected in the high hot rebound and low Tan delta, indicating a improved rolling resistance. Compound tear and abrasion resistance were maintained compared to standard carbon blacks.

## Claims

1. A vulcanizable rubber composition comprising:
(A) a diene based elastomer;
(B) from 10 to 60 parts by weight, per 100 parts by weight of elastomer (phr), of an oxidized carbon black comprising on its surface at least one functional group selected carboxylic acid (-COOH) and hydroxide (-OH); and
(C) from 0.1 to 0.5 phr of a polymeric amine comprising a primary amine functionality.

2. The vulcanizable rubber composition of claim 1, wherein the amount of polymeric amine ranges from 0.2 to 0.4 phr.

3. The vulcanizable rubber composition of claim 1 or 2, further comprising from 0.5 to 2 parts by weight of an aromatic carboxylic acid or aromatic acid anhydride, per 1 part by weight of the polymeric amine.

4. The vulcanizable rubber composition of at least one of the previous claims, wherein the diene based elastomer comprises at least one elastomer selected from the group consisting of polyisoprene (natural or synthetic), polybutadiene, and styrene-butadiene rubber.

5. The vulcanizable rubber composition of at least one of the previous claims, wherein the diene based elastomer comprises a solution polymerized elastomer functionalized with at least one functional group selected from the group consisting of primary amine, secondary amine, and tertiary amines, monoalkoxy, dialkoxy, trialkoxy, silyl, thiol, thioester, thioether, sulfanyl, mercapto, sulfide, and combinations thereof.

6. The vulcanizable rubber composition of at least one of the previous claims, wherein the diene based elastomer comprises polybutadiene and a styrene-butadiene rubber functionalized with at least one functional group selected from the group consisting of primary amines, secondary amines, tertiary amines, monoalkoxy, dialkoxy, trialkoxy, silyl, thiols, thioesters, and thioethers.

7. The vulcanizable rubber composition of at least one of the previous claims, wherein the polymeric amine is a polyethyleneimine.

8. The vulcanizable rubber composition of at least one of the previous claims 1 to 6, wherein the polymeric amine is a polyoxyalkylene amine.

9. The vulcanizable rubber composition of at least one of the previous claims 3 to 8 wherein the aromatic carboxylic acid or aromatic acid anhydride is selected from the group consisting of benzoic acid, salicylic acid, 3-hydroxybenzoic acid, 4-hydroxybenzoic acid, phthalic anhydride, and benzoic anhydride.

10. The vulcanizable rubber composition of at least one of the previous claims, wherein the aromatic carboxylic acid or aromatic acid anhydride is salicylic acid.

11. The vulcanizable rubber composition of at least one of the previous claims, further comprising from 0.5 to 20 phr of a sulfur containing organosilicon compound.

12. The vulcanizable rubber composition of claim 11, comprising from 1 to 10 phr of the sulfur containing organosilicon compound.

13. The vulcanizable rubber compound of at least one of the previous claims, further comprising from 1 to 10 phr of a bis (trialkoxysilylalkyl) polysulfide.

14. A pneumatic tire comprising the vulcanizable rubber composition of at least one of the previous claims.

15. A pneumatic tire comprising a vulcanized rubber composition as a vulcanized rubber composition of at least one of the previous claims.

## Patentansprüche

1. Vulkanisierbare Kautschukzusammensetzung, umfassend:
(A) ein Elastomer auf Dienbasis;
(B) 10 bis 60 Gewichtsteile pro 100 Gewichtsteile Elastomer (phr) eines oxidierten Rußes, der auf seiner Oberfläche wenigstens eine funktionelle Gruppe umfasst, die aus Carbonsäure (-COOH) und Hydroxid (-OH) ausgewählt ist; und
(C) von 0,1 bis 0,5 phr eines polymeren Amins, umfassend eine primäre Aminfunktionalität.

2. Vulkanisierbare Kautschukzusammensetzung nach Anspruch 1, wobei die Menge an polymerem Amin von 0,2 bis 0,4 phr reicht.

3. Vulkanisierbare Kautschukzusammensetzung nach Anspruch 1 oder 2, ferner umfassend 0,5 bis 2 Gewichtsteile einer aromatischen Carbonsäure oder eines aromatischen Säureanhydrids pro 1 Gewichtsteil des polymeren Amins.

4. Vulkanisierbare Kautschukzusammensetzung nach wenigstens einem der vorhergehenden Ansprüche, wobei das Elastomer auf Dienbasis wenigstens ein Elastomer umfasst, das aus der Gruppe ausgewählt ist, die aus Polyisopren (natürlich oder synthetisch), Polybutadien und Styrol-Butadien-Kautschuk besteht.

5. Vulkanisierbare Kautschukzusammensetzung nach wenigstens einem der vorhergehenden Ansprüche, wobei das Elastomer auf Dienbasis ein lösungspolymerisiertes Elastomer umfasst, das mit wenigstens einer funktionellen Gruppe funktionalisiert ist, die aus der Gruppe ausgewählt ist, die aus primärem Amin, sekundärem Amin und tertiären Aminen, Monoalkoxy, Dialkoxy, Trialkoxy, Silyl, Thiol, Thioester, Thioether, Sulfanyl, Mercapto, Sulfid und Kombinationen davon besteht.

6. Vulkanisierbare Kautschukzusammensetzung nach wenigstens einem der vorhergehenden Ansprüche, wobei das Elastomer auf Dienbasis ein Polybutadien und einen Styrol-Butadien-Kautschuk umfasst, die mit wenigstens einer funktionellen Gruppe funktionalisiert sind, die aus der Gruppe ausgewählt ist, die aus primären Aminen, sekundären Aminen und tertiären Aminen, Monoalkoxy, Dialkoxy, Trialkoxy, Silyl, Thiolen, Thioestern und Thioethern besteht.

7. Vulkanisierbare Kautschukzusammensetzung nach wenigstens einem der vorhergehenden Ansprüche, wobei das polymere Amin ein Polyethylenimin ist.

8. Vulkanisierbare Kautschukzusammensetzung nach wenigstens einem der vorhergehenden Ansprüche 1 bis 6, wobei das polymere Amin ein Polyoxyalkylenamin ist.

9. Vulkanisierbare Kautschukzusammensetzung nach wenigstens einem der vorhergehenden Ansprüche 3 bis 8, wobei die aromatische Carbonsäure oder ein aromatisches Säureanhydrid aus der Gruppe ausgewählt ist, die aus Benzoesäure, Salicylsäure, 3-Hydroxybenzoesäure, 4-Hydroxybenzoesäure, Phthalsäureanhydrid und Benzoesäureanhydrid besteht.

10. Vulkanisierbare Kautschukzusammensetzung nach wenigstens einem der vorhergehenden Ansprüche, wobei die aromatische Carbonsäure oder das aromatische Säureanhydrid Salicylsäure ist.

11. Vulkanisierbare Kautschukzusammensetzung nach wenigstens einem der vorhergehenden Ansprüche, ferner umfassend von 0,5 bis 20 phr einer schwefelhaltigen Organosiloxanverbindung.

12. Vulkanisierbare Kautschukzusammensetzung Anspruch 11, umfassend von 1 bis 10 phr der schwefelhaltigen Organosiloxanverbindung.

13. Vulkanisierbare Kautschukverbindung nach wenigstens einem der vorhergehenden Ansprüche, ferner umfassend von 1 bis 10 phr eines Bis(trialkoxysilylalkyl)sulfids.

14. Luftreifen, umfassend die vulkanisierbare Kautschukzusammensetzung nach wenigstens einem der vorhergehenden Ansprüche.

15. Luftreifen, umfassend eine vulkanisierte Kautschukzusammensetzung als eine vulkanisierte Kautschukzusammensetzung nach wenigstens einem der vorhergehenden Ansprüche.

## Revendications

1. Composition de caoutchouc vulcanisable comprenant :
(A) un élastomère à base diénique ;
(B) de 10 à 60 parties en poids par 100 parties en poids d'élastomère (phr), d'un noir de carbone oxydé comprenant sur sa surface au moins un groupe fonctionnel choisi parmi un acide carboxylique (-COOH) et un hydroxyde (-OH) ; et
(C) de 0,1 à 0,5 phr d'une amine polymère comprenant une fonctionnalité d'amine primaire.

2. Composition de caoutchouc vulcanisable selon la revendication 1, dans laquelle la quantité de l'amine polymère se situe dans une plage de 0,2 à 0,4 phr.

3. Composition de caoutchouc vulcanisable selon la revendication 1 ou 2, comprenant en outre de 0,5 à 2 parties en poids d'un acide carboxylique aromatique ou d'un anhydride d'acide aromatique pour 1 partie en poids de l'amine polymère.

4. Composition de caoutchouc vulcanisable selon au moins une des revendications précédentes, dans laquelle l'élastomère à base diénique comprend au moins un élastomère choisi parmi le groupe constitué par le polyisoprène (naturel ou synthétique), le polybutadiène et un caoutchouc de styrène-butadiène.

5. Composition de caoutchouc vulcanisable selon au moins une des revendications précédentes, dans laquelle l'élastomère à base diénique comprend un élastomère polymérisé en solution, fonctionnalisé avec au moins un groupe fonctionnel choisi parmi le groupe constitué par une amine primaire, une amine secondaire, et une amine tertiaire, un groupe monoalcoxy, un groupe dialcoxy, un groupe trialcoxy, un groupe silyle, un groupe thiol, un groupe thioester, un groupe thioéther, un groupe sulfanyle, un groupe mercato, un groupe sulfure, ainsi que leurs combinaisons.

6. Composition de caoutchouc vulcanisable selon au moins une des revendications précédentes, dans laquelle l'élastomère à base diénique comprend du polybutadiène et un caoutchouc de styrène-butadiène fonctionnalisé avec au moins un groupe fonctionnel choisi parmi le groupe constitué par une amine primaire, une amine secondaire, une amine tertiaire, un groupe monoalcoxy, un groupe dialcoxy, un groupe trialcoxy, un groupe silyle, un groupe thiol, un groupe thioester et un groupe thioéther.

7. Composition de caoutchouc vulcanisable selon au moins une des revendications précédentes, dans laquelle l'amine polymère est une polyéthylèneimine.

8. Composition de caoutchouc vulcanisable selon au moins une des revendications 1 à 6, dans laquelle l'amine polymère est une polyoxyalkylèneamine.

9. Composition de caoutchouc vulcanisable selon au moins une des revendications 3 à 8, dans laquelle l'acide carboxylique aromatique ou l'anhydride d'acide aromatique est choisi parmi le groupe constitué par l'acide benzoïque, l'acide salicylique, l'acide 3-hydroxybenzoïque, l'acide 4-hydroxybenzoïque, l'anhydride phtalique et l'anhydride benzoïque.

10. Composition de caoutchouc vulcanisable selon au moins une des revendications précédentes, dans laquelle l'acide carboxylique aromatique ou l'anhydride d'acide aromatique est l'acide salicylique.

11. Composition de caoutchouc vulcanisable selon au moins une des revendications précédentes, comprenant en outre de 0,5 à 20 phr d'un composé d'organosilicium contenant du soufre.

12. Composition de caoutchouc vulcanisable selon la revendication 11, comprenant de 1 à 10 phr du composé d'organosilicium contenant du soufre.

13. Composition de caoutchouc vulcanisable selon au moins une des revendications précédentes, comprenant en outre de 1 à 10 phr d'un bis (trialcoxysilylalkyl) polysulfure.

14. Bandage pneumatique comprenant la composition de caoutchouc vulcanisable selon au moins une des revendications précédentes.

15. Bandage pneumatique comprenant une composition de caoutchouc vulcanisé à titre de composition de caoutchouc vulcanisé selon au moins une des revendications précédentes.
